# FASCICULE DE BREVET EUROPEEN

(11) **EP 4 373 690 B1**
(45) Date de publication et mention de la délivrance du brevet: **23.04.2025**
(21) Numéro de dépôt: 22732217.9
(22) Date de dépôt: 09.06.2022
(51) Int. Cl.: B60K 17/30, B60K 7/00, B65G 1/04, B65G 1/137

(54) **CHARIOT DE PRÉPARATION DE COMMANDES EQUIPÉ D'UN MOTEUR UNIQUE D'ENTRAINEMENT DES ROUES MOTRICES**
WAGEN ZUR VORBEREITUNG VON BESTELLAUFTRÄGEN, MIT EINEM EINZIGEN ANTRIEBSMOTOR FÜR DIE ANGETRIEBENEN RÄDER
CART FOR PREPARING ORDERS, EQUIPPED WITH A SINGLE MOTOR PROPELLING THE DRIVE WHEELS

(30) Priorité: 21.07.2021 FR 2107848
(43) Date de publication de la demande: 29.05.2024
(73) Titulaire: Exotec Product France, 59170 Croix (FR)
(72) Inventeur: CHATAIN, Marc, 68230 ZIMMERBACH (FR); ROELS, Pierre, 59160 LOMME (FR)
(74) Mandataire: Plasseraud IP
(86) Numéro de dépôt international: PCT/EP2022/065686
(87) Numéro de publication internationale: WO 2023/001449

(56) Documents cités:
- WO-A1-2020/192806
- JP-A- 2014 103 878
- JP-A- S62 103 223

## Description

### 1. Domaine de l'invention

Le domaine de l'invention est celui de la logistique en entrepôt et en particulier du transport de pièces ou de produits.

Plus précisément, l'invention concerne un chariot motorisé destiné à transporter une charge.

L'invention trouve notamment une application dans l'automatisation des flux de marchandises d'un entrepôt de stockage, par exemple dans un entrepôt de préparation de commandes d'une chaîne logistique, ou dans l'automatisation d'un service de livraison de commandes en point-retrait, communément appelé « drive ».

### 2. Etat de la technique

Dans la chaîne logistique globale, la gestion des flux et la manipulation des produits au sein d'un entrepôt jouent un rôle déterminant.

Traditionnellement, un préparateur de commandes se déplace dans l'entrepôt pour collecter chaque produit d'une commande à son emplacement sur une étagère d'un rayonnage.

On constate qu'une telle organisation implique que le préparateur parcoure de longs trajets au cours d'une journée de travail, ce qui occasionne fatigue et perte de temps lorsque le trajet n'est pas optimisé.

Un autre inconvénient est que le préparateur doit parfaitement connaître l'agencement de l'entrepôt pour ne pas perdre de temps.

Pour limiter la fatigue due aux déplacements, améliorer la gestion de la cueillette (ou « picking » en anglais), réduire le temps de préparation des commandes et son coût, on a imaginé une organisation des entrepôts où les produits sont prélevés dans des rayonnages ou des par des robots puis acheminés par ces mêmes robots jusqu'à des postes de préparation de commandes.

On a notamment proposé de mettre en œuvre des chariots autoguidés qui sont à la fois capables de circuler sur le sol et de grimper le long de rayonnages pour aller prélever des produits stockés dans des bacs.

On connaît ainsi, par exemple, du document WO 2010/100513 A2 un chariot autoguidé équipé sur les côtés de son châssis de roues dentées rétractables pouvant se déployer latéralement. Ces roues dentées sont destinées à s'engrener sur des crémaillères verticales fixées à des rayonnages, pour permettre au chariot de s'élever entre deux rayonnages afin de parvenir jusqu'au niveau d'un bac à prélever.

Afin de guider ces chariots sur le sol et notamment entre les rayonnages, on a pensé à implanter des rails de circulation sur le sol. L'implantation de rails est cependant couteuse et la présence de rails rend le nettoyage du sol plus difficile. On a également envisagé de faire rouler des chariots autoguidés directement sur le sol entre les rayonnages et parfois même également sous les rayonnages.

Afin de pouvoir contrôler les changements de direction du chariot sans perdre de temps à décrire des virages, on a proposé de monter chacune des roues motrices de ces chariots sur une tourelle de pivotement motorisée indépendante. Ces tourelles connues sont équipées chacune d'un moteur pour faire pivoter la roue autour d'axe vertical et d'un moteur pour entrainer la roue en rotation, pour contrôler le déplacement des roues à chaque instant.

Un inconvénient de ces techniques connues est qu'elles sont complexes et couteuses à mettre en œuvre, notamment du fait que deux moteurs sont nécessaires par tourelle.

Des autres chariots motorisés sont connus des documents JP 2014 103878 A et JP S62 103223 A.

### 3. Objectifs de l'invention

L'invention a donc notamment pour objectif de pallier les inconvénients de l'état de la technique cités ci-dessus.

Plus précisément, l'invention a pour objectif de fournir une technique de chariot motorisé qui soit simple à mettre en oeuvre.

Un autre objectif de l'invention est de fournir une technique de chariot motorisée qui soit peu coûteuse.

Un objectif de l'invention est également de fournir une technique chariot motorisé qui soit fiable.

### 4. Exposé de l'invention

Ces objectifs, ainsi que d'autres qui apparaîtront par la suite sont atteints à l'aide d'un chariot motorisé destiné à transporter une charge comprenant au moins 3 roues motrice destinées à rouler sur le sol, aptes à pivoter d'au moins 90°, lesdites roues motrices étant montées sur des dispositifs de pivotement et d'entrainement fixés sur le châssis dudit chariot, chacun desdits dispositifs de pivotement et d'entrainement comprenant un moteur d'actionnement de moyens de pivotement d'une roue motrice autour d'un axe vertical, destinés à permettre de faire pivoter une roue motrice autour d'elle-même.

Selon l'invention, un tel chariot comprend un unique moteur d'entrainement en rotation desdites roues motrices destiné à actionner des moyens d'entrainement en rotation desdites roues motrices logés dans lesdits dispositifs de pivotement et d'entrainement.

Ainsi de façon inédite, l'invention propose de mettre en œuvre un chariot équipé d'un seul moteur d'entrainement de l'ensemble de l'ensemble des roues motrices du chariot, ce qui permet de simplifier la mise en oeuvre du chariot et de l'alléger. Ceci permet astucieusement au chariot de changer de direction et repartir à angle droit et ainsi de cheminer sur un parcours ordonné suivant le plan d'une grille. Les inventeurs ont en effet constaté que lorsque le chariot est prévu pour se déplacer uniquement selon des directions perpendiculaires, la mise en œuvre d'un seul moteur d'entrainement, qui entraine les roues sensiblement à la même vitesse, suffit pour corriger les petits écarts de positions angulaires des roues par rapport à ces directions de déplacement. Il n'y a ainsi pas de dérive du chariot.

Dans un mode de réalisation particulier de l'invention, ledit chariot est un chariot à guidage automatique.

Selon un mode de réalisation particulier de l'invention, lesdits moyens de pivotement d'une roue motrice comprennent une première roue dentée entrainée en rotation par un desdits moteurs d'actionnement des moyens de pivotement engrenée avec une deuxième roue dentée d'axe vertical, ladite deuxième roue dentée étant fixée sur une fourche chevauchant ladite roue motrice, l'axe de ladite roue motrice étant monté pivotant par rapport aux fourreaux de ladite fourche s'étendant de part et d'autre de ladite roue motrice.

De préférence, lesdits moyens d'entrainement comprennent un premier pignon et un deuxième pignon coniques agencés l'un par rapport à l'autre de sorte à former un renvoi d'angle, l'axe dudit premier pignon étant coaxial avec celui de ladite deuxième roue dentée et l'axe du deuxième pignon étant coaxial avec l'axe d'une desdites roues motrices.

Dans un mode de réalisation avantageux de l'invention, ledit moteur d'entrainement actionne lesdits moyens d'entrainement en rotation desdites roues motrices de chacun desdits dispositifs de pivotement et d'entrainement par l'intermédiaire d'une courroie.

Préférentiellement, lesdits dispositifs de pivotement et d'entrainement sont sensiblement identiques.

Selon un mode de réalisation particulier de l'invention, un chariot motorisé tel que décrit ci-dessus présente quatre motrices montées sur des dispositifs de pivotement et d'entrainement fixés sensiblement aux quatre coins dudit châssis. Dans un mode de réalisation particulier de l'invention, au moins un desdits dispositifs de pivotement et d'entrainement est configuré de sorte que l'axe du deuxième pignon de ce dispositif passe par le centre de la roue motrice montée sur ce dispositif.

La roue motrice ne tourne alors pas lors de son pivotement autour d'un axe vertical.

### 5. Liste des figures

D'autres caractéristiques et avantages de l'invention apparaîtront plus clairement à la lecture de la description suivante d'un mode de réalisation de l'invention, donné à titre de simple exemple illustratif et non limitatif, et des dessins annexés parmi lesquels :
- la figure 1 est une vue schématique, en perspective, d'un entrepôt de préparation de commandes équipé d'un exemple de mode de réalisation de chariots à guidage automatique selon l'invention ;
- la figure 2 est une représentation détaillée d'un des chariots présentés en référence à la figure 1 ;
- la figure 3 est une vue de détail, de dessus, du système d'entrainement des roues motrices du chariot présenté en référence à la figure 2.

### 6. Description détaillée de l'invention

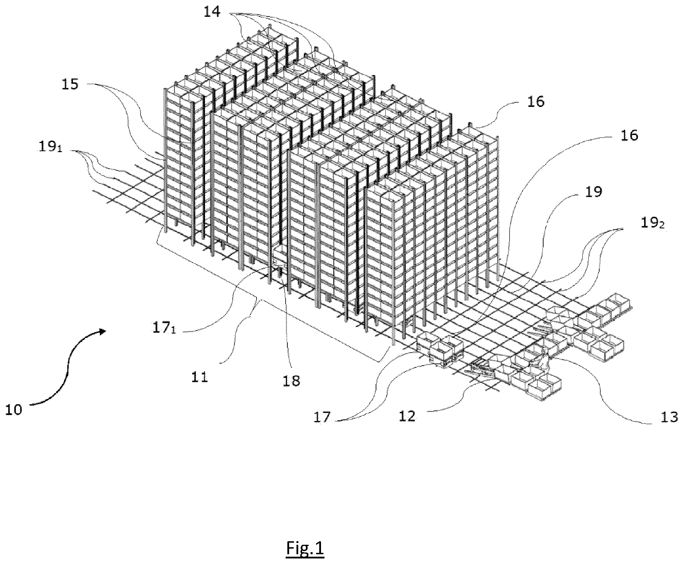

On a illustré sur la figure 1 un entrepôt 10 destiné au stockage de produits en vue de leur expédition. Cet entrepôt est réparti entre une aire de stockage 11 et une zone de préparation de commandes dans laquelle sont disposés des postes de préparation de commandes 12 au niveau desquels des opérateurs 13 préparent des colis avec les produits d'une commande.

L'aire de stockage 11 est organisée en rayonnages 14 comprenant des étagères sur plusieurs niveaux supportées par des montants 15, sur lesquelles sont entreposés des bacs 16 qui contiennent les produits ou articles stockés.

Une flotte de chariots à guidage automatique 17 (« Automatic Guided Vehicle » en anglais) assure le transport des bacs 16 entre l'aire de stockage 11 et les postes de préparation de commandes 12.

Lorsqu'un robot 17 reçoit des informations de localisation d'un bac 16 contenant un ou plusieurs articles à aller prélever pour compléter une commande traitée par un opérateur 13, le robot 17 roule sur le sol jusqu'au pied du rayonnage 14 où est rangé le bac 16 et se positionne dans l'allée 18 entre ce rayonnage 14 et le rayonnage qui lui fait face.

Lors de ce déplacement, le robot 17 suit la direction de bandes tracées au sol organisées selon le schéma d'une grille 19. Comme on peut le voir sur la figure 1, un robot 17 peut ainsi se déplacer dans la direction des bandes longitudinales 19₁ ou des bandes latérales 19₂ perpendiculaires aux bandes 19₁ et peut circuler sous les rayonnages 14.

Ce robot 17 grimpe ensuite, à la manière du robot 17₁ représenté sur la figure 1, en prenant appui sur deux rayonnages jusqu'au niveau de l'étagère où est stocké le bac 16 et l'extrait du rayonnage. Il redescend ensuite entre les deux rayonnages, et une fois au sol, transporte le bac 16 jusqu'au poste de préparation de commandes 12 en cheminant sur la grille 19. L'opérateur 13 n'a plus qu'à prélever la quantité d'articles commandés et les emballer.

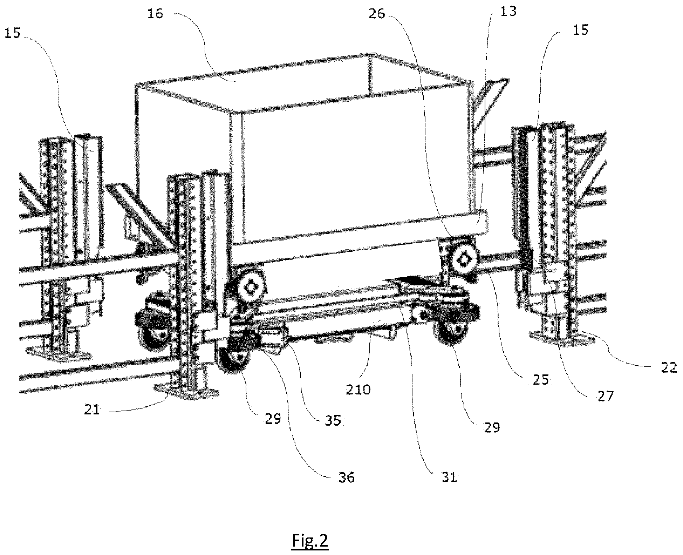

On a représenté sur la figure 2 un robot 17 portant un bac 16 dans une allée 18 au pied de deux rayonnages 21 et 22. Dans ce mode de réalisation particulier de l'invention, la largeur du châssis 23 du robot et celle du bac 16 sont avantageusement inférieures à l'espacement entre deux montants adjacents 15 du rayonnage 21 ou du rayonnage 22 afin de permettre au robot de passer entre ces montants.

Le robot 17 est équipé aux quatre coins de son châssis 23 de roues dentées 25 escamotables motorisées pouvant être escamotées à l'intérieur du châssis 23 ou déployée hors du châssis 23.

Pour grimper entre les deux rayonnages 22 et 23, le robot 17 déploie les bras motorisés 26 portant les roues dentées 25 hors du châssis 23 dans le prolongement des diagonales du châssis jusqu'à ce que les roues dentées atteignent des crémaillères 27 fixées sur les montants 15, comme on peut le voir sur la figure 2, et puissent s'engrener avec celles-ci.

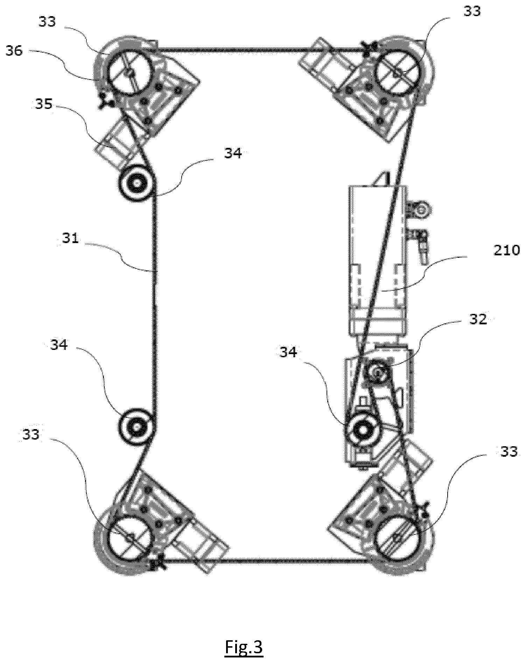

Le robot 17 présente par ailleurs quatre roues motrices 29 montées sur des tourelles aux quatre coins du châssis 23 et entrainées par un moteur unique 210. Comme on peut le voir sur la figure 3, qui est une vue partielle de dessus du système d'entrainement des roues motrices 29, le moteur 210 entraine une courroie dentée 31, via un galet 32 accouplé à l'arbre moteur. Cette courroie 31 est maintenue tendue à l'aide de trois galets tendeurs 34.

Le défilement de la courroie 31 entraine en rotation des poulies 33 reliées aux roues motrices 29 par l'intermédiaire de deux pignons formant un renvoi d'angle. La rotation d'une poulie 33 fait tourner un premier pignon fixé et coaxial avec cette poulie, qui engrène un deuxième pignon orienté perpendiculairement, fixé à une extrémité de l'axe de la roue, ce qui entraine la roue motrice 29 en rotation avec une vitesse de rotation proportionnelle au rapport de réduction de l'engrenage formé des deux pignons.

Dans ce mode de réalisation particulier de l'invention, les quatre tourelles sont identiques et le moteur 210 entraine les quatre roues motrices 29 en rotation à la même vitesse. Il convient de noter que ce moteur unique permet au chariot de tourner sur lui-même et ainsi d'orienter le chariot perpendiculairement à sa direction précédente pour lui permettre de réaliser un angle droit.

Il convient par ailleurs de noter que chacune des tourelles présente un système de pivotement de la fourche sur laquelle est montée une roue motrice permettant d'orienter les roues motrices dans des directions différentes, de façon indépendante. Ce système de pivotement comprend un moteur pas à pas 35 et une roue dentée 36 d'axe coaxial avec celui de la poulie 33, actionné par le moteur 35 par l'intermédiaire d'un pignon intermédiaire monté sur l'arbre du moteur 35.

## Revendications

1. Chariot motorisé (17) destiné à transporter une charge comprenant au moins trois roues motrices (29) destinées à rouler sur le sol, aptes à pivoter d'au moins 90°, lesdites roues motrices (29) étant montées sur des dispositifs de pivotement et d'entrainement fixés sur le châssis (23) dudit chariot, chacun desdits dispositifs de pivotement et d'entrainement comprenant un moteur d'actionnement de moyens de pivotement d'une roue motrice (29) autour d'un axe vertical, destinés à permettre de faire pivoter une roue motrice (29) autour d'elle-même, le chariot motorisé comprenant un unique moteur (210) d'entrainement en rotation desdites roues motrices (29) destiné à actionner des moyens d'entrainement en rotation desdites roues motrices logés dans lesdits dispositifs de pivotement et d'entrainement.

2. Chariot selon la revendication 1, **caractérisé en ce que** ledit chariot (17) est un chariot à guidage automatique.

3. Chariot selon l'une quelconque des revendications 1 et 2, **caractérisé en ce que** lesdits moyens de pivotement d'une roue motrice (29) comprennent une première roue dentée entrainée en rotation par un desdits moteurs d'actionnement des moyens de pivotement engrenée avec une deuxième roue dentée d'axe vertical, ladite deuxième roue dentée étant fixée sur une fourche chevauchant ladite roue, l'axe de ladite roue motrice étant monté pivotant par rapport aux fourreaux de ladite fourche s'étendant de part et d'autre de ladite roue motrice (29).

4. Chariot selon la revendication 3, caractérisé ce que lesdits moyens d'entrainement comprennent un premier pignon et un deuxième pignon coniques agencés l'un par rapport à l'autre de sorte à former un renvoi d'angle, l'axe dudit premier pignon étant coaxial avec celui de ladite deuxième roue dentée et l'axe du deuxième pignon étant coaxial avec l'axe d'une desdites roues motrices (29).

5. Chariot selon l'une quelconque des revendications 1 à 4, **caractérisé en ce que** ledit moteur d'entrainement (210) actionne lesdits moyens d'entrainement en rotation desdites roues motrices de chacun desdits dispositifs de pivotement et d'entrainement par l'intermédiaire d'une courroie (31).

6. Chariot selon l'une quelconque des revendications 1 à 5, **caractérisé en ce que** lesdits dispositifs de pivotement et d'entrainement sont sensiblement identiques.

7. Chariot selon l'une quelconque des revendications 1 à 6, **caractérisé en ce qu'**il présente quatre roues motrices (29) montées sur des dispositifs de pivotement et d'entrainement fixés sensiblement aux quatre coins dudit châssis.

8. Chariot selon la revendication 3, **caractérisé en ce qu'**au moins un desdits dispositifs de pivotement et d'entrainement est configuré de sorte que l'axe du deuxième pignon de ce dispositif passe par le centre de la roue motrice (29) montée sur ce dispositif.

## Patentansprüche

1. Motorisierter Wagen (17) zum Transportieren einer Last, aufweisend mindestens drei angetriebene Räder (29) zum Rollen auf dem Boden, die um mindestens 90° schwenkbar sind, wobei die angetriebenen Räder (29) an Schwenk- und Antriebsvorrichtungen angebracht sind, die an dem Fahrgestell (23) des Wagens befestigt sind, wobei jede der Schwenk- und Antriebsvorrichtungen einen Schwenkeinrichtung-Betätigungsmotor zum Betätigen von Einrichtungen zum Schwenken eines angetriebenen Rads (29) um eine vertikale Achse aufweist, die dazu bestimmt sind, zu erlauben, ein angetriebenes Rad (29) um sich selbst schwenken zu lassen, wobei der motorisierte Wagen einen einzigen Antriebsmotor (210) zum Versetzen der angetriebenen Räder (29) in Rotation aufweist, der bestimmt ist, um Rotationsantriebseinrichtungen der angetriebenen Räder, die in den Schwenk- und Antriebsvorrichtungen untergebracht sind, zu betätigen.

2. Wagen nach Anspruch 1, **dadurch gekennzeichnet, dass** der Wagen (17) ein Wagen mit automatischer Führung ist.

3. Wagen nach einem der Ansprüche 1 und 2, **dadurch gekennzeichnet, dass** die Schwenkeinrichtungen eines angetriebenen Rads (29) ein erstes Zahnrad aufweisen, das von einem der Schwenkeinrichtung-Betätigungsmotoren in Rotation versetzt wird und in Eingriff mit einem zweiten Zahnrad ist, dessen Achse vertikal ist, wobei das zweite Zahnrad an einer auf dem Rad sitzenden Gabel befestigt ist, wobei die Achse des angetriebenen Rads schwenkend bezüglich der Hüllen der Gabel, die sich beiderseits des angetriebenen Rads (29) erstreckt, montiert ist.

4. Wagen nach Anspruch 3, **dadurch gekennzeichnet, dass** die Antriebseinrichtungen ein erstes Ritzel und ein zweites Ritzel aufweisen, die konisch sind und derart zueinander angeordnet sind, um einen Rückkehrwinkel zu bilden, wobei die Achse des ersten Ritzels koaxial mit derjenigen des zweiten Zahnrads ist und die Achse des zweiten Ritzels koaxial mit der Achse eines der angetriebenen Räder (29) ist.

5. Wagen nach einem der Ansprüche 1 bis 4, **dadurch gekennzeichnet, dass** der Antriebsmotor (210) die Rotationsantriebseinrichtungen der angetriebenen Räder jeder Schwenk- und Antriebsvorrichtungen über einen Riemen (31) betätigt.

6. Wagen nach einem der Ansprüche 1 bis 5, **dadurch gekennzeichnet, dass** die Schwenk- und Antriebsvorrichtungen im Wesentlichen identisch sind.

7. Wagen nach einem der Ansprüche 1 bis 6, **dadurch gekennzeichnet, dass** er vier angetriebene Räder (29) aufweist, die an Schwenk- und Antriebsvorrichtungen angebracht sind, die im Wesentlichen an vier Ecken des Fahrgestells befestigt sind.

8. Wagen nach Anspruch 3, **dadurch gekennzeichnet, dass** mindestens eine der Schwenk- und Antriebsvorrichtungen derart konfiguriert ist, dass die Achse des zweiten Ritzels dieser Vorrichtung durch die Mitte des an dieser Vorrichtung montierten angetriebenen Rads (29) hindurchgeht.

## Claims

1. Motorised vehicle (17) intended to transport a load comprising at least three drive wheels (29) intended to run along the floor, capable of pivoting at least 90°, said drive wheels (29) being mounted on pivoting and driving devices attached to the chassis (23) of the vehicle, each of the pivoting and driving devices comprising a motor for actuating means for pivoting a drive wheel (29) about a vertical axis, intended to make it possible to pivot a drive wheel (29) about itself,
said motorised vehicle comprising a single motor (210) for driving in rotation said drive wheels (29) intended to actuate the means for driving in rotation said drive wheels housed in said pivoting and driving devices.

2. Vehicle according to claim 1, **characterised in that** said vehicle (17) is an automatic guided vehicle.

3. Vehicle according to any one of claims 1 and 2, **characterised in that** said means for pivoting a drive wheel (29) comprise a first toothed wheel driven in rotation by one of said motors for actuating the pivoting means engaged with a second toothed wheel of vertical axis, said second toothed wheel being attached to a fork straddling said wheel, the axle of said drive wheel being mounted pivoting in relation to the blade of said fork extending on either side of said drive wheel (29).

4. Vehicle according to claim 3, **characterised in that** said driving means comprise a first conical pinion and a second conical pinion arranged relative to one another so as to form an angular transmission, the axle of said first pinion being coaxial with that of said second toothed wheel and the axle of the second pinion being coaxial with the axle of one of said drive wheels (29).

5. Vehicle according to any one of claims 1 to 4, **characterised in that** said drive motor (210) actuates said means for driving in rotation said drive wheels of each of said pivoting and driving devices by means of a belt (31).

6. Vehicle according to any one of claims 1 to 5, **characterised in that** said pivoting and driving devices are substantially identical.

7. Vehicle according to any one of claims 1 to 6, **characterised in that** it has four drive wheels (29) mounted on pivoting and driving devices attached substantially to the four corners of said chassis.

8. Vehicle according to claim 3, **characterised in that** at least one of said pivoting and driving devices is configured so that the axle of the second pinion of this device passes through the centre of the drive wheel (29) mounted on this device.
